Europäisches Patentamt

European Patent Office

Office européen des brevets

(19)

(11) Publication number: **0 157 433**
A1

(12) **EUROPEAN PATENT APPLICATION**

(21) Application number: **85200189.0**

(22) Date of filing: **13.02.85**

(51) Int. Cl.⁴: **A 23 L 1/325**, A 23 B 4/12, A 23 B 4/00, A 23 J 3/00, A 23 K 1/00, A 23 K 3/00

(30) Priority: **08.03.84 US 587333**

(43) Date of publication of application: **09.10.85**
**Bulletin 85/41**

(84) Designated Contracting States: **AT BE CH DE FR GB IT LI LU NL SE**

(71) Applicant: **Research Corporation, 405 Lexington Avenue, New York, N.Y. 10174 (US)**

(72) Inventor: **Karmas, Endel, 12 Nassau Road, Kendall Park New Jersey (US)**
Inventor: **Lauber, Ellen, R.D. No.2, Box 19, Farmingdale New Jersey (US)**

(74) Representative: **Urbanus, Henricus Maria, Ir. et al, c/o Vereenigde Octroolbureaux Nieuwe Parklaan 107, NL-2587 BP 's-Gravenhage (NL)**

(54) **Shelf-stable fish-based product.**

(57) A shelf-stable fish-based product is provided prepared utilizing a mixture of minced, cooked, fermented fish with a starch material providing an acceptable texture and palatable snack food which can be naturally or synthetically flavored to obtain the desired flavored product.

EP 0 157 433 A1

## SHELF-STABLE FISH-BASED PRODUCT

This invention relates to a shelf-stable fish-based product and process for producing the product. The product is stable against mold and bacterial growth and desirable as human food.

The efficient utilization of limited protein sources is of a major worldwide concern. The seas contain a variety of fish in abundance that have not been used to the full potential as a high quality protein source. Fish proteins have high nutritional value as compared to that of land animals. Fish proteins are well-balanced in essential amino acids and highly digestible.

Most fish is marketed fresh, frozen, canned, cured, or in convenience form, such as, fish sticks. Recently, underutilized fish species have been subjected to different processing techniques such as comminution, dewatering, fermentation, and the like to develop new forms of fish products. There are several U. S. Patents describing these processes. For example, U. S. Patent No. 2,986,469 describes animal feed production by fermenting the combination of fish solubles and ⎮ edible carbohydrates.

U. S. Patent No. 3,904,776 describes a fish product formed of a heat setting fish-containing edible synthetic protein fibers and carbohydrates.

U. S. Patent No. 3,985,904 discloses a shelf-stable high-moisture food product, including a fish product, comprising greater than 50 percent ground cooked proteinaceous meaty material, 1-35 percent gelatinized starchy filler material, a nontoxic acid to produce a pH of the product from about 3.9 to about 5.5 and an effective amount of antimycotic.

U. S. Patent No. 4,016,295 describes a protein material, such as fish, subjected to acid-producing fermentation and adding the fermented material to a colloidal solution of protein such as milk or soya milk wherein the curds produced trap the fermented fish.

U. S. Patent No. 4,041,181 teaches a method of making pet food by fermenting proteinaceous material, such as fish, bound into coherent pieces by gelled or coagulated binders such as gluten with a fermentable carbohydrate.

U. S. Patent No. 4,126,705 describes a dehydrated protein snack food utilizing sequential steps of preparing thin slices of the protein material, including fish, exposing the slices to a flavoring composition, eliminating entrapped air from the protein material to compact it with flavoring composition, freezing the composition, and dehydrating the resulting product.

U. S. Patent No. 4,212,892 describes a method of preparing a high-protein snack food comprising a plastic protein fish gel in combination with a gel-starch material which is extruded into desired shapes and cooked or fried.

The major problems encountered in the above described processes and products have been short shelf-life, poor appearance, the development of off-flavor and poor texture. Thus, these products have poor consumer appeal and acceptance. By the process of the present invention, fish-based products are produced having stable shelf-life, good appearance, good texture as well as being palatable. Moreover, the fish-based products of the present invention mask the typical fish flavor which has deleteriously characterized the prior art and therefore may be enhanced with any desired flavoring.

-3-

0157433

In the present invention, a shelf-stable fish product is provided which comprises a mixture of minced, cooked, fermented fish flesh, water and a starch material wherein the proper ratio of minced, cooked, fermented fish flesh to starch material is carefully controlled to provide an excellent product having superior appearance and texture. The water activity, average moisture content as well as the pH is carefully controlled to provide the highly desirable shelf-stable product.

The process of this invention to produce the fish-based product includes the following steps:

(1) blanching minced fish flesh to eliminate competing microflora and until the protein coagulates;

(2) fermenting the blanched minced fish flesh in the presence of fermenting microorganisms for a period of time until the pH of said fish flesh is about 5.2 to about 4.5;

(3) combining the blanched fermented fish flesh with a starch material in an amount so that the weight ratio of said fermented fish flesh to said starch material is about 0.8:1.2 to about 1.2:0.8 with sufficient water to form the fish-containing dough having a pliable consistency;

(4) heating the fish-containing dough at a temperature from about 50°C to about 250°C for a period of time until a baked cohesive product is produced and the water content is reduced below about 35 weight percent of the total product.

The type of fish flesh used in the process of this invention can be any fish known to be edible. These fish can include haddock, whiting, cod, cusk, catfish, ocean perch, silver hake and many other known fishes. Generally, the fillets of the fish are initially removed for immediate sale. The remaining deboned; or, alternatively, the whole fish may be subjected to mechanical deboning. This process consists of passing fish through a machine which separates soft flesh from the rest of the carcass. The particle size of the comminuted or minced product is controlled to range from large flakes down to a smooth fish paste. Moreover, many conventional fish by-products can be employed in accordance with this invention such as, for example, "fish sawdust" thus permitting a further economical application of the present invention. By "fish sawdust" is meant the dust resulting from the sawing procedures employed in cutting blocked frozen fish for commercial preparation.

Comminution or mincing of the fish flesh is significant not only in terms of the economics of processing and development of new markets, but also in the biological resource economics. Mincing produces a higher yield of edible flesh with less waste than filleting. Minced fish has proven versatile. It can be blended, flavored, formed, or used as a stuffing.

Several problems have been associated with mechanically deboned fish, including high bacterial counts, discoloration, and other problems associated with frozen storage. Fish contains high levels of psychrophilic bacteria which are able to grow and cause spoilage even when fish is stored in ice. Mincing increases total bacterial load in a product and encourages the presence of pathogenic bacteria. The mincing operation may blend microorganisms throughout the fish flesh mass and/or provide a source of contamination from machines not properly sanitized or recontaminated from previous lots of fish processed the same day. These problems must be avoided by means well known in the art in the production of the minced fish flesh such as used in this invention.

The minced fish flesh used in this invention can be modified further using surimi technology. Surimi is a semi-processed wet fish protein prepared from minced fish. The procedure for making surimi starts by washing one part of the minced flesh to about five parts chilled water. The washing removes undesirable matter such as blood, flesh pigments, soluble enzymes, and trimethylamine. However, it also removes soluble proteins. Therefore, the mass is reduced to approximately 75% of the unwashed weight. Next, the minced flesh is dewatered. The washing step may be repeated several times as required. The washed minced flesh is strained to remove small bones, connective tissue, black skin particles, scales, and tendons. Finally, additives such as salt, sugar, and phosphates are chopped with minced fish to stabilize the protein for frozen storage pending further processing into kamaboku-type products which are traditional Japanese fish paste products. The ratio of mince to water, water contact times, water removal method, and moisture content, before and after watering and dewatering, are some factors that may influence the texture of the final product.

Surimi has been shown to contain a high percentage of myofibrilar proteins with very high gel-forming capabilities. It has a desirable white color, bland flavor, and good retention of functional properties during frozen storage.

After the minced fish flesh has been prepared as described above, this minced fish flesh is blanched by applying heat, as by boiling, frying or baking, for a sufficient period of time until the protein of the fish coagulates or when the cooked flesh becomes opaque or solid in appearance compared to the translucent effect of uncooked fish flesh. The blanching procedure is employed to eliminate competing microflora. Temperatures in the range from about 70°C to about 120°C are satisfactory for the blanching procedure.

After the minced fish flesh is cooked, it is fermented using fermenting microorganisms and known fermenting procedures. These microorganisms must produce sufficient acid to cope with the buffering capacity of subsequently added ingredients and yield a pH in the range from about 4.5 to about 5.2, preferably from about 4.8 to about 5.1. More than one microorganism may be used during the process, either singly or in combinations. Typical of the microorganisms used in the fermentation can include Lactobacillus helveticus, Lactobacillus acidophilus, Lactobacillus casei, Lactobacillus leichmannii, Lactobacillus lactis, Lactobacillus jugurti, Lactobacillus fermentium, Lactobacillus plantarum, Lactobacillus delbrueckii, Pediococcus acidilactici, Pediococcus cerevisiae, Leuconostoc mesenteroides, Streptococcus lactis, Streptococcus cremoris, Streptococcus thermophilus, Acetobacter, Bacterium sacchrityrieus, Amylobacter among others or any suitable mutants of these species.

Originally, foods were fermented for preservation. Fermentation may have increased vitamin content, digestibility, keeping quality and organoleptic characteristics while decreasing cooking times. With the development of starter cultures, quality uniformity was accomplished. A starter culture of an isolated colony of beneficial bacteria, usually

_Lactobacillus_ or _Pediococcus_, is added to provide consistent fermentation, develop desired flavors and textures and to inhibit the growth of pathogenic bacteria, such as _Staphylococcus aureus_.

The lactic acid bacteria are divided into two biochemical subgroups distinguishable by the products formed from glucose: (a) homofermenters convert glucose almost quantitatively to lactic acid; and (b) heterofermenters which, in addition to lactic acid, produce ethanol and $CO_2$ (Stanier, 1977). Most bacteria are inhibited by the high acid content produced by lactic acid fermentation, resulting in longer shelf-life of the product.

The starch material including flours to be blended with the minced, cooked, fermented fish flesh, particularly contemplated for use in this invention, include potato starch, potato flours, corn flour, modified or unmodified corn starch, rice flour, wheat flour and the like.

The starch material and the fermented fish flesh are mixed with water to form the fish-containing dough having a pliable consistency such as unbaked dough. In order to achieve the proper texture in the final product, the amount of the minced, blanched and fermented fish flesh to the starch material is present in the weight ratio range from about 0.8:1.2 to about 1.2:0.8, preferably using a 1:1 weight ratio. If the fish portion exceeds the higher range of the weight ratio, the texture is poor and the product falls apart. If the fish portion falls below the lower range of the weight ratio, the resulting product becomes hard and not considered acceptable.

After the fish-containing dough has been prepared, it can be shaped and heated at temperatures from about 50°C to about 250°C for a period of time until a baked cohesive product is produced, i.e., it looses its pliability, and the water content is reduced below about 35 weight percent preferably in the range from about 30 to about 32 weight percent of the total product.

A preferred processing technique for the fish-containing dough is the use of an extruder. Extrusion-cooked and engineered foods have utilized a wide range of basic materials to produce foods of desired structure and rheological properties. This technique has several advantages: versatility, high production rates, long shelf-life and improved functional characteristics. The fabricated foods of this invention have been cooked and given desired textures, shapes and density characteristics by an extrusion-cooking process. In this instance, a hot extruder is used. As the fish-containing dough moves through the barrel of its extruder, it is thoroughly worked into a partially plastic pliable dough by cooking under conditions of elevated temperatures and pressures.

The extruder as used herein is simultaneously a pump, forcing the material to the exit; a forming device, achieved by forcing a plastic or pliable mass through a die opening; a mixer, due to deviations from perfect flow; a heat exchanger, transferring heat by frictional actions and applying heat along the barrel; and a chemical reactor, causing, e.g., flavor changes. Which of these functions is dominant in any given system, depends on the design and the method of operation of the machine. In the process of this invention, the temperatures in the extruder can range from about 80°C to about 250°C.

0157433

The fish-dough exiting from the extruder is shaped and, if required, dried to reduce the water content below about 35 weight percent, preferably between about 28 to about 35 weight percent, more preferably between about 30 to 32 weight percent of the total product.

In accordance with the present invention, and among the many advantages provided thereby, the "off flavor", i.e., the typical or natural fish flavor which has unacceptably characterized the prior art, is masked by the present formulation. These snack foods are, therefore, characterized by a bland or essentially tasteless flavor which is satisfactorily palatable and may be flavored as desired. Preferably, various natural or synthetic food flavorings can be added to the product during the course of the present process, including, for example, other desired fish flavors, cheese flavors or even candy flavors to effect the desired product. This improvement is due, in part, to several features of the present invention including the particular myofibrilar protein constituency of the present composition and the mincing and/or surimi processing employed, herein.

For purposes of achieving a shelf-stable fish product, it is essential that the water activity of the product be below 0.90 and in the range from about 0.60 to 0.90. The water activity of the product is a measure of water available for microbial growth and biochemical reactions. "Water activity" is defined as a fraction of water vapor pressure of an aqueous solution at equilibrium with the surrounding atmosphere over the vapor pressure of pure water at the same temperature and used as a measure of the availability of water in a system. Water activity measurements can be made by use of a manometer which measures the vapor pressure of foods or electric hygrometers. Water activity is temperature dependent since the proportion of free to bound water varies with temperature. Humectants, such as glycerol, glycols, sorbitol, salt or sucrose, can be added to lower the water activity to the desired level.

The following examples illustrate the product and processes of this invention.

### Examples 1-4

Fresh whiting was filleted, wrapped in freezer paper, put into freezer bags and stored at -25°C for later use.

The frozen fish fillets were ground twice in a meat grinder with 4-mm die holes and divided into four portions. Mincing the fish resulted in an off-white-color mush. Two minced portions were formed into a surimi product. The resulting product was an opaque thick paste-like consistency. One surimi portion was formed into a dough, while the other was cooked and fermented prior to being formed into a dough. The fourth minced portion was formed into a dough without prior treatment. All doughs were subsampled and tested for pH, water activity ($a_w$), and moisture content prior to being extruded. The extrudates were subdivided and dried at 93°C for 0, 10, and 30 minutes. All extrudates were tested for pH, $a_w$ and moisture content.

### Treatments

To produce the surimi, minced fish was placed in a fine-meshed bag and washed for 1 minute in cold tap water (1 part fish to 5 parts water) twice. After the second washing, the mince was dewatered by squeezing the bag until the flesh was paste-like in consistency.

Cooking was accomplished by putting a portion of prepared fish into a double-boiler for 10 minutes. After cooking, the fish was allowed to cool in a plastic container.

0157433

Lactacel 75 (Microlife Technics), a frozen, highly concentrated lactic acid starter culture of <u>Pediococcus</u> organisms was used for fermentation. The culture was thawed 2 or 3 minutes before use. In a plastic container, the fish portion was mixed thoroughly with the following: 0.02% <u>Pediococcus</u>, 0.66% water, 0.002% $MnSO_4$, and 0.63% dextrose (based on the weight of the fish). This mixture in the container was incubated at 37°C for 10-12 hours to result in a final pH of approximately 5.0.

The following ingredients in Table I below were added to all the prepared fish products:

Table I

| Ingredients | Weight % |
| --- | --- |
| Cooked Fermented Fish | 35.7 |
| *Wheat Flour | 35.7 |
| **Corn Starch | 4.8 |
| Water | 23.8 |

\* National Starch & Chemical Corporation
\*\* Argo Pure Corn Starch (CPC International Inc.)

The doughs were extruded with a C. W. Brabender, Model 2001 3/4" Laboratory Extruder. The screw design was one of constant pitched flights and of increasing diameter. The L/D (length-diameter ratio) was 20:1 and a 1/4 inch circular die was used. The following processing parameters were used:

| Temperature of Zone 1 | 80°C |
| --- | --- |
| Temperature of Zone 2 | 180°C |
| Temperature of Zone 3 | 200°C |
| Screw speed | 200 rpm |

The pH was measured with a Corning Model 12 Research pH meter (Corning Glass Works). A sample was blended with distilled water in a Waring Commercial Blender, Model 31B292 (Waring Products Division) at low speed for 30 seconds. The sample was transferred to a beaker where the electrodes were placed directly into the sample.

The water activity ($a_w$) was measured with a Lufft Water Activity Meter (Stuttgart, West Germany). The instrument was calibrated for 3 hours every 24 hours with a

-14-

0157433

saturated solution of $BaCl_2$ having an $a_w=0.90$ at 25° C. A 20-g sample was placed in the container, the lid was closed, and in 3 hours the result was read on the $a_w$-scale.

The moisture content was determined by heating a sample to a constant weight in a drying oven for 16-18 hours at 105°C.

The examples are designated as follows:

Example 1 - minced fish
Example 2 - minced fish, fermented
Example 3 - surimi
Example 4 - surimi, fermented

0157433

The following pH values as listed in Table II were obtained:

## Table II

pH values for fish and 30 min-dried extrudates at 93°C.

| Examples | Fish pH | Extrudate pH |
|---|---|---|
| 1 minced fish | 6.8 | 6.6 |
| 2 minced fish, fermented | 4.9 | 4.8 |
| 3 surimi | 6.9 | 6.5 |
| 4 surimi, fermented | 5.1 | 5.2 |

The extrudate of the fermented minced fish and fermented surimi provide a satisfactory pH for each of the products while the non-fermented extrudates are too high for providing a shelf-stable fish product.

The following average water content and water activity of dough and 0-, 10-, and 30- min-dried extrudates are shown in Table III.

Table III

| Examples | 1 | 2 | 3 | 4 |
|---|---|---|---|---|
| | | Minced fish, | | Surimi |
| | Minced fish | fermented | Surimi | fermented |
| Dough: | | | | |
|   water activity $(a_w)$ | .95 | .96 | .96 | .96 |
|   average initial | | | | |
| water content (%) | 55.3 | 54.2 | 53.4 | 52.6 |
| Extrudates: | | | | |
|   0-min-dried- | | | | |
|   water activity $(a_w)$ | .95 | .95 | .96 | .96 |
|   average water | | | | |
| content (%) | 41.6 | 41.9 | 43.5 | 42.9 |
|     average reduction | | | | |
|     of the initial | | | | |
| water content (%) | 13.7 | 12.3 | 9.9 | 9.7 |
| 10-min-dried- | | | | |
|   water activity $(a_w)$ | .94 | .92 | .94 | .93 |
|   average water | | | | |
| content (%) | 39.8 | 41.2 | 41.1 | 42.0 |
|     average reduction | | | | |
|     of the initial | | | | |
| water content (%) | 15.7 | 13.0 | 12.3 | 10.6 |
| 30-min-dried- | | | | |
|   water activity $(a_w)$ | .88 | .89 | .90 | .90 |
|   average water | | | | |
| content (%) | 35.0 | 32.3 | 35.7 | 30.0 |
|     average reduction | | | | |
|     of the initial | | | | |
| water content (%) | 20.3 | 21.9 | 17.7 | 22.6 |

(%) relative to dough weight.

Relative to the dough, the water activity ($a_w$) did not change even though the moisture content dropped in the 0-min-dried extrudates. Both $a_w$ and moisture content decreased for the 10- and 30-min -dried extrudates. All 30-min-dried extrudates had an $a_w$ 0.90 and average water content range moisture content of 30%-35%.

The 30-min-dried fermented extrudates fish had the best combination of an appropriate $a_w$ and low moisture content as compared to the other 30-min-dried extrudates.

The 30-min-dried extrudates were fairly uniform in appearance, but puffed. The fermented samples required the least amount of force to cut through the sample but required the most work done on the sample. The opposite was found for the non-fermented samples. According to individuals who tasted the samples, the samples were palatable.

Air-tightly packaged samples of the fermented extrudates, both minced-fish-based (Example 2) and surimi-based (Example 4), were still palatable after a six-month storage period at the room temperature.

0157433

<u>What is claimed is:</u>

1. A process for producing a fish product which comprises:

(1) blanching minced fish flesh to eliminate competing microflora and until the protein coagulates;

(2) fermenting the blanched minced fish flesh in the presence of fermenting microorganisms for a period of time until the pH of said fish flesh is about 5.2 to about 4.5;

(3) combining the blanched fermented fish flesh with a starch material in an amount so that the weight ratio of said fermented fish flesh to said starch material is about 0.8:1.2 to about 1.2:0.8 with sufficient water to form the fish-containing dough having a pliable consistency;

(4) heating the fish-containing dough at a temperature from about 50°C to about 250°C for a period of time until a baked cohesive product is produced and the water content is reduced below about 35 weight percent of the total product.

2. The process of Claim 1 wherein in Step 5 the fish-containing dough is extruded at a temperature from about 80°C to about 250°C for a period of time until a cohesive product is produced shaped and dried to reduce the average water content of the product below about 35 weight percent of the total product.

3. The process of Claim 1 or 2 wherein the minced fish flesh of Step 1 is subjected to the surimi process prior to fermentation.

4. The process of Claim 2 or 3 wherein the starch material of Step 3 is wheat flour or a combination of wheat flour and corn starch.

5. The process of Claim 4 wherein the weight ratio of fermented fish flesh to wheat flour is 1:1.

6. The process of Claim 5 wherein the pH of the fermented fish flesh is about 4.8 to about 5.1.

7. A shelf-stable fish product comprising a mixture of water, minced blanched fermented fish flesh or blanched fermented fish sawdust and a starchy material wherein the weight ratio of minced cooked fermented fish flesh or fish sawdust to starchy material is about 0.8:1.2 to about 1.2:0.8, said fish based product having a pH from about 4.5 to about 5.2, water activity content from about 0.6 to 0.9 and an average moisture content from about 28 to about 35 weight percent.

8. The product of Claim 7 wherein the fermented fish flesh was subjected to the surimi process prior to fermentation.

9. The product of Claim 7 or 8 wherein the starchy material is wheat flour.

10. The product of any of Claims 7 to 9 wherein the pH of the minced fermented fish flesh is about 4.8 to about 5.1.

11. The product of any of Claims 1 to 10 wherein the average moisture content is about 30 to about 32 weight percent.

12. The product of any of Claims 7 to 11 wherein the natural fish flavor is masked so that the product is essentially tasteless.

13. The product of Claim 12 wherein natural or synthetic flavoring is provided to obtain the desired flavored product.

0157433

. Application number

European Patent
Office

**EUROPEAN SEARCH REPORT**

EP  85 20 0189

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-2 986 469  (J. KRÜSS) <br><br> * Column  1, lines 29-45; claims 1,5 * | | A 23 L   1/325 <br> A 23 B   4/12 <br> A 23 B   4/00 <br> A 23 J   3/00 <br> A 23 K   1/00 <br> A 23 K   3/00 |
| D,A | US-A-3 985 904  (J.W. BERNOTAVICZ) <br> * Column  3, lines 30-40; claims 1,16 * | | |
| A | EP-A-0 096 902  (TAIYO FISHERY CO.) <br> * Claims 1,5,6 * | | |
| A | CH-A- 629 087  (SALEN INTERDEVELOP AB) <br> * Page 3, right hand column, lines 39-41; claims 1-3 * | | |

TECHNICAL FIELDS
SEARCHED (Int. Cl.4)

A 23 L   1/00
A 23 B   4/00
A 23 J   3/00
A 23 K   1/00
A 23 K   3/00

The present search report has been drawn up for all claims

| Place of search | Date of completion of the search | Examiner |
|---|---|---|
| BERLIN | 03-06-1985 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82